# EUROPEAN PATENT SPECIFICATION

(11) **EP 0 789 295 B1**
(45) Date of publication and mention of the grant of the patent: **02.05.2003**
(21) Application number: 97300853.5
(22) Date of filing: 10.02.1997
(51) Int. Cl.: G06F 3/033, G02F 1/1335

(54) **Display unit having a transparent touchswitch and a liquid crystal display, and manufacturing method of the same**
Anzeigeeinheit mit einem transparenten Berührungsschalter und einer Flüssigkristallanzeige, und Verfahren zur Herstellung
Unité d'affichage avec un commutateur tactile transparent et un affichage à cristaux liquides, et procédé de fabrication

(30) Priority: 09.02.1996 JP 2437796
(43) Date of publication of application: 13.08.1997
(60) Divisional application: 02078279.3
(73) Proprietor: SEIKO INSTRUMENTS INC., Chiba-shi, Chiba 261 (JP)
(72) Inventor: Matsuhuria, Tsutomu, c/o Seiko Instruments Inc., Chiba-shi, Chiba (JP); Munemasa, Kimiko, c/o Seiko Instruments Inc., Chiba-shi, Chaba (JP)
(74) Representative: Sturt, Clifford Mark

(56) References cited:
- GB-A- 2 263 009
- US-A- 4 242 388
- PATENT ABSTRACTS OF JAPAN vol. 095, no. 008, 29 September 1995 & JP 07 114010 A (MATSUSHITA ELECTRIC IND CO LTD), 2 May 1995,
- PATENT ABSTRACTS OF JAPAN vol. 018, no. 497 (P-1801), 16 September 1994 & JP 06 167703 A (SHARP CORP), 14 June 1994,
- PATENT ABSTRACTS OF JAPAN vol. 006, no. 255 (P-162), 14 December 1982 & JP 57 152033 A (HITACHI SEISAKUSHO KK), 20 September 1982,

## Description

The present invention relates to a display unit having a touch switch, a manufacturing method of the same and an electronic device equipped with such a display unit.

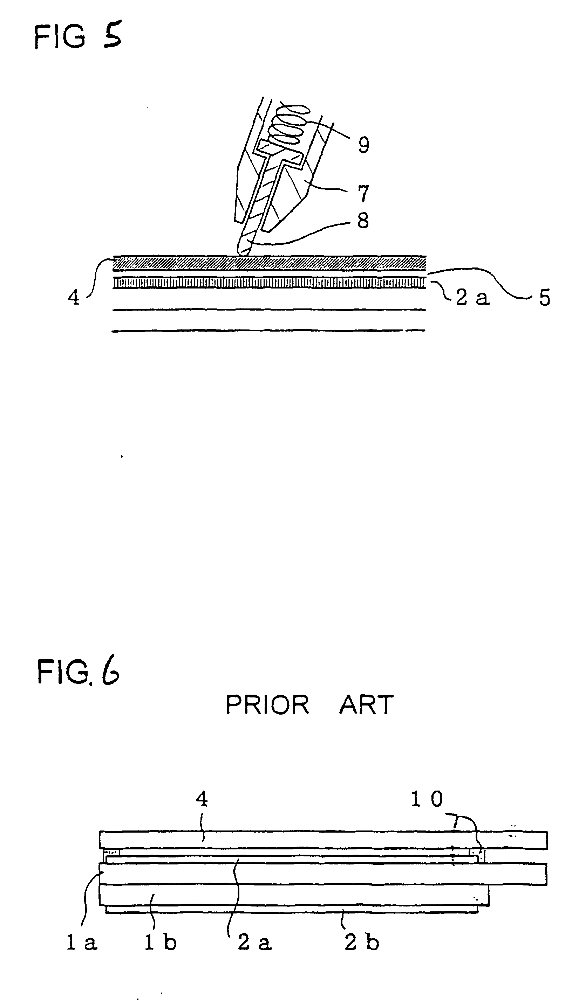

Hitherto, as a method for disposing a transparent touch switch on a liquid crystal display, a transparent touch switch 4 is adhered and secured by double coated adhesive 10 of about 0.5 to 1 mm thick provided at the periphery of a liquid crystal display in which liquid crystal is concealed and held between at least two transparent substrates 1a and 1b and optical films 2a and 2b are pasted on the surface of the transparent substrates as shown in FIG. 5.

However, when the transparent touch switch is disposed on the liquid crystal display, the image quality thereof degrades because light coming from the outside is reflected on the surface of the transparent touch switch and the surface between the transparent touch switch and the display panel. In particular, the screen is darkened and the image quality degrades remarkably when the touch switch is placed on a reflective type liquid crystal display.

JP 07114010 describes a liquid crystal display including a digitiser function. The spacing between a touch panel, which provides the digitiser input, and a liquid crystal display element is provided with a rubber like resin layer. The rubber like resin layer is formed by roller or spin coating.

US 4242388 describes a sealing cement for sealing together glass plates of a liquid crystal display cell. The cement contains sufficient quantity of a particulate filler, such as glass beads or alumina granules, to ensure that the cement remains in the region where it is deposited and does not flow into the display area of the liquid crystal cell.

Accordingly, it is an object of the present invention to improve the image quality of a display unit equipped with a transparent touch switch.

In a first aspect, this invention provides a display unit a display unit having a transparent touch switch and a liquid crystal display, said touch switch being adhered with said liquid crystal display by the space between the display surface of said liquid crystal display and the opposed face of an input area of said touch switch being filled with a clear adhesive and characterised in that said clear adhesive in the space between the display surface and the input area of said touch switch contains clear fillers.

In a second aspect, this invention provides a method for manufacturing a display unit, characterised by comprising the steps of:
applying clear adhesive to at least either the back of a transparent touch switch or the display surface of a liquid crystal display characterised by:
   registering said transparent touch switch with said liquid crystal display to laminate them thereby providing a contact area of the adhesive between the transparent touch switch and the display surface, moving the transparent touch switch and the display surface towards one another to expand the contact area; and
   allowing said clear adhesive to flow to fill a space between said liquid crystal display and said transparent touch switch at least on the whole surface of the input area of said touch switch.

In a third aspect, this invention provides an electronic device, characterised by having:
a display unit in accordance with the first aspect; and
an input pen having a mechanism for limiting force applied to said touch switch.

In order to solve the above-mentioned problem, the display face of the liquid crystal display is adhered with the back of the input area of the transparent touch switch by clear adhesive in the display unit equipped with the transparent touch switch and the liquid crystal display of analog resistance film type, digital resistance film type, electrostatic capacity or ultrasound type liquid crystal display using transparent films or transparent substrates. Because this arrangement allows the reflectance between the touch switch and the liquid crystal display to be reduced as compared to the prior art display, the image quality is improved.

Further, clear fillers are mixed into the clear adhesive. Thereby, uneven display which is otherwise caused by the hardening and shrinkage of the clear adhesive when the touch switch having a large input area is adhered may be suppressed without damaging the image quality.

A method for manufacturing the display unit comprises the steps of applying the clear adhesive at the centre of the back of the transparent touch switch, reversing the touch switch so that the fluid adhesive forms a drop hanging away from the switch surface and registering the touch switch with the display unit. Then, the touch switch and liquid crystal display unit are slowly brought together to laminate them so that the clear adhesive flows to completely fill the gap between the touch switch and the liquid crystal display. This manufacturing method allows the clear adhesive to be filled between the touch switch and the liquid crystal display without admission of bubbles in atmosphere. This is the preferred method of manufacture. However, the clear adhesive could be initially applied to the surface of the liquid crystal display instead of or in addition to the surface of the touch switch.

Further, there is provided an electronic device having a display unit in which the transparent touch switch is adhered face-to-face at least at its input area by the clear adhesive and an input pen having a mechanism for absorbing force applied to the touch switch. Because such input pen allows the force applied to the touch switch to be suppressed below a predetermined value, no uneven display occurs.

The display unit constructed as described above allows the image quality to be improved and may be manufactured readily without requiring an expensive manufacturing machine.

Preferred embodiments of the invention will now be described, by way of example only, with reference to the accompanying diagrammatic figures, in which:
FIG. 1 is a side view of a display unit according to the present invention;
FIG. 2 is a detailed section view of an adhesive portion of the liquid crystal display and a touch switch of FIG. 1;
FIG. 3 is a flowchart for explaining a method for manufacturing the display unit of the present invention;
FIGS. 4A to 4D are views showing stages in the method of manufacturing the display unit of the present invention according to the flow chart of FIG. 3;
FIG. 5 is a section view of a special pen for use in an electronic device of the present invention; and
FIG. 6 is a section view of a prior art display unit.

Adhesive having an equal refractive index with that of a touch switch and a material of substrate of a liquid crystal display is filled between at least the whole input area of the touch switch and the liquid crystal display in a display unit having the transparent touch switch. Thereby, because the refractive indices of the touch switch, adhesive layer and liquid crystal display become equal and no light refract among each layer, reflection of light between the touch switch and the liquid crystal display is almost eliminated, thus increasing the image quality of the liquid crystal display.

Preferred embodiments of the present invention will be explained below with reference to the drawings.

### [First Embodiment]

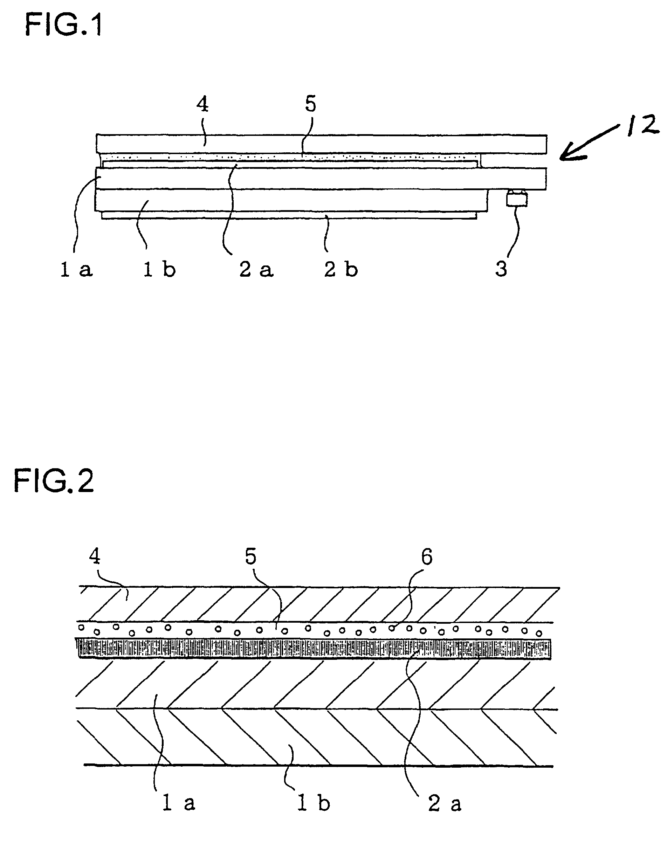

FIG. 1 is a schematic side view showing a first embodiment of the inventive display unit. In the display unit of the present embodiment, a liquid crystal layer is formed and held between two glass transparent substrates 1a and 1b of 0.7 mm and a polarising plate 2a and a polarising plate 2b attached with a reflecting plate are pasted to the transparent substrates, respectively, to form a liquid crystal display 12. Further, a driver IC 3 for driving the liquid crystal is mounted at the terminal section of the transparent substrates. A touch switch 4 of analog resistance film type using 0.7 mm of glass and film is adhered on the display side of the liquid crystal display by clear adhesive 5. The clear adhesive is filled at least on the whole back of the input area of the touch switch. Here, if clear adhesive having a refractive index of 1.47 to 1.57 after hardening is used, the reflection between the touch switch and the liquid crystal display is almost eliminated and the image quality of the display unit is improved because it is almost equal to the refractive index of the glass substrate of 1.52.

It is also most preferable to use clear adhesive whose refractive index after hardening is equal to the refractive index of glass of 1.52. That is, because the refractive index of the glass to which the touch switch is adhered and that of the adhesive after hardening are equal, the reflection between the touch switch and the liquid crystal display is eliminated and the image quality is improved considerably.

The touch switch used here is not confined only to that of the analog resistance film type, and other types of touch switch such as a resistance film digital type or ultrasound type may be used.

### [Second Embodiment]

FIG. 2 shows a second embodiment of the inventive display unit. The basic structure thereof is the same with the first embodiment. Because the clear adhesive 5 for adhering the touch switch with the liquid crystal display has about 5 % of hardening shrinkage factor, there is a possibility that the touch switch and the liquid crystal display may warp and cause an unevenness on the display screen when the adhesive is hardened. Then, clear fillers 6 are mixed in the clear adhesive 5 to lower the hardening shrinkage factor to prevent the warp from occurring.

The clear fillers of the present embodiment are true spherical plastic particles whose diameter is 12 microns and whose refractive index is 1.47 to 1.57. That is, it is preferable to use clear fillers having a refractive index close to the refractive index of the adhesive after hardening.

The percentage of the fillers mixed in the adhesive is set at 2 wt %. When they are mixed more than that, the adhesive layer becomes cloudy, thus degrading the image quality. However, it is possible to mix more when the refractive index of the fillers and the adhesive are almost same (e.g. 1.52) because the cloudiness of the adhesive layer is reduced.

### [Third Embodiment]

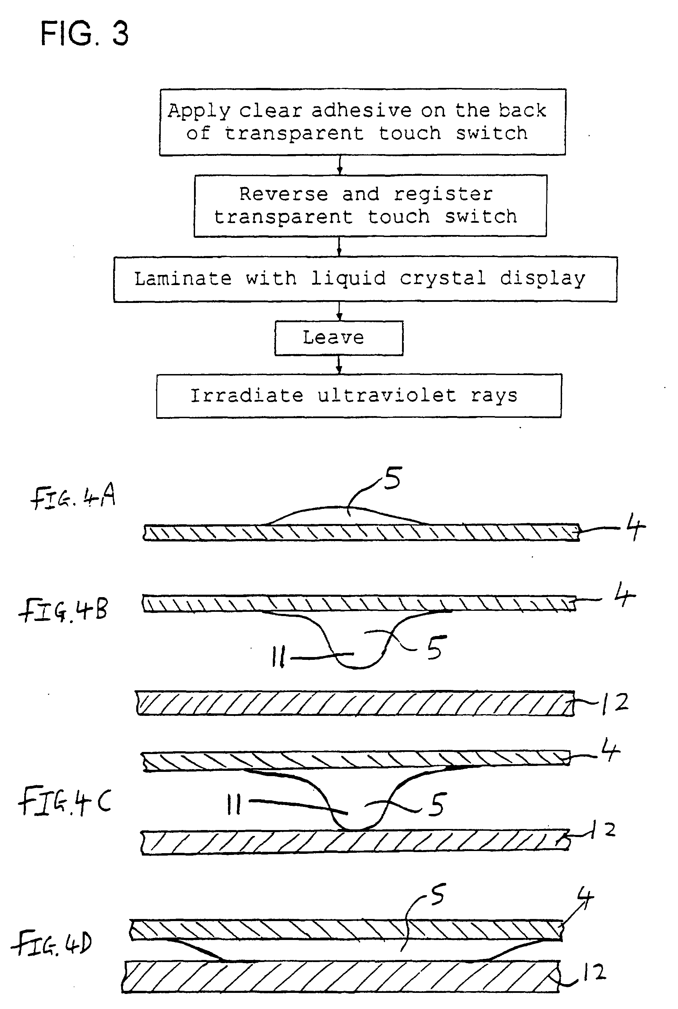

FIG. 3 is a flowchart showing a method for manufacturing the display unit having the touch panel of the present invention, while FIGS. 4A to 4D show steps of the manufacturing method. First, the transparent touch switch 4 is flipped back and the clear adhesive 5 is applied at the centre of the back of the transparent touch switch 4, as shown in FIG. 4A. Degassed clear adhesive may be used as necessary. This clear adhesive 5 is ultraviolet hardening clear adhesive, for example, and about 0.7 g is applied in the case where the liquid crystal display is about 6 inch.

Next, the transparent touch switch 4 is inverted and registered with the liquid crystal display 12, as shown in FIG. 4B. In this inverted position the clear adhesive 5 is pulled away from the touch switch 4 by gravity to form a drip 11. Then, the transparent touch switch 4 is laminated with the registered liquid crystal display 12 by slowly moving the touch switch 4 and the liquid crystal display 12 towards one another so that the drip 11 produced in the adhesive 5 applied to the transparent touch switch 4 contacts the centre of the liquid crystal display 12, as shown in FIG. 4C. Then, the touch switch 4 and the liquid crystal display 12 are slowly moved closer together so that the contact area between the adhesive 5 and the liquid crystal display 12 expands from the initial contact point and the adhesive 5 flows to fill more of the gap between touch switch 4 and the liquid crystal display 12. Then, they are left so that the adhesive 5 flows slowly between the transparent touch switch 4 and the liquid crystal display 12 as shown in FIG. 4D. They are left for about 30 to 60 minutes until the adhesive 5 fills the gap between them. The viscosity of the adhesive is preferably within a range of 1000 to 6000 cp. in order to allow it to flow to fill the gap when left. After confirming that the adhesive has filled the gap, ultraviolet radiation is irradiated uniformly from the top to harden it. Through the above-mentioned process, the thickness of the adhesive layer turns out to be 0.1 to 0.2 mm which is thinner than the prior art layer by 0.4 to 0.8 mm.

It is important that the touch switch 4 and liquid crystal display 12 are slowly moved together. If they are quickly moved together, the contact surface between the adhesive 5 and the liquid crystal display 12 will become bumpy and bubbles of air will be trapped between the touch switch 4 and liquid crystal display 12, damaging the image quality of the liquid crystal display 12.

When the viscosity of the adhesive is high, e.g. 10000 cp., it will not expand between the touch switch and the display unit and will not fill the gap. However, because the viscosity of the adhesive drops by heating it, the adhesive may fill the gap even if it has a viscosity of about 20000 cp. if it is left while heating it after the lamination.

The adhesive is not limited only to the ultraviolet hardening type adhesive. That is, it may be even two-liquid type epoxy adhesive so long as it generates almost no gas. However, thermal hardening type adhesive having a high viscosity which requires heat treatment cannot be used because hardening advances in the heating and leaving step.

The clear adhesive may be applied also to the side of the liquid crystal display. In this case, when ultraviolet radiation is irradiated from the side of the touch switch which comes to the under side when laminated by using the ultraviolet hardening type clear adhesive, the lamination is preferably carried out on a transparent stage such as quartz glass so that the ultraviolet radiation can be irradiated through the quartz glass after filling the gap with the clear adhesive without the device having to be moved.

### [Fourth Embodiment]

FIG. 5 shows an embodiment of an electronic device having the inventive display unit attached with the touch switch. Unevenness of display which is otherwise caused on the liquid crystal screen in inputting on the touch switch surface by a pen is prevented by using a special pen.

That is, when a force of about 200 to 300 g or more is applied to the touch switch by the edge or nib of the pen in the electronic device for inputting on the display unit in which the transparent touch switch is adhered on the liquid crystal display by using the pen or the like, there is a possibility that the uneven display occurs on the screen of the liquid crystal display by the force which acts via the adhesive. Then, a pen having a mechanism for absorbing the force of 200 g or more which causes the uneven display, i.e. a mechanism by which no force of 200 g or more is applied to the touch switch, is used.

That is, the special pen 7 has a structure in which a spring 9, or other resilient means, which contracts with force of 200 g or more supports the nib or point 8 of the pen. Because no force of 200 g or more is applied to the liquid crystal display by this pen, it is possible to input by the pen without damaging the image quality of the liquid crystal display. The structure of the pen is not confined specifically only to that described.

Further, because operating force of the touch switch of the analog resistance film type is 15 to 100 g, an electronic device which causes no trouble in the operation of the switches and which does not damage the image quality of the liquid crystal display may be realised by constructing such that no force of 100 g or more is applied to the touch switch by using a special pen having a structure in which a spring or other resilient means which contracts with force of 100 g or more is used.

Accordingly, the present invention allows the image quality of the display unit equipped with the transparent touch switch to be improved and the display unit to be thinned as described above. Further, the whole strength is enhanced by adhering face-to-face. Still more, the display unit may be provided at low cost because no investment in an expensive production facility is required.

Thus, the invention provides a display unit having a transparent touch switch and a liquid crystal display, characterised in that said touch switch is adhered with said liquid crystal display by filling clear adhesive between the display surface of said liquid crystal display and the back of an input area of said touch switch.

Further, the invention provides a method for manufacturing a display unit, comprising the steps of:
applying clear adhesive at least either on the back of a transparent touch switch or the display surface of a liquid crystal display;
registering said transparent touch switch with said liquid crystal display to laminate them; and
filling said clear adhesive by flowing it at least on the whole surface of the input area between said liquid crystal display and said transparent touch switch.

Finally, the invention provides an electronic device, having:
a display unit in which a transparent touch switch is adhered face-to-face at least at its input area; and
an input pen having a mechanism for absorbing force applied to said touch switch.

## Claims

1. A display unit having a transparent touch switch (4) and a liquid crystal display (12), said touch switch being adhered with said liquid crystal display by the space between the display surface (2a) of said liquid crystal display and the opposed face of an input area of said touch switch being filled with a clear adhesive (5) and **characterised in that** said clear adhesive in the space between the display surface and the input area of said touch switch contains clear fillers.

2. A display unit as claimed in claim 1, **characterised in that** the clear fillers (6) comprise up to about 2% by weight of the adhesive (5).

3. A display unit as claimed in claim 1 or 2, **characterised in that** the clear fillers (6) comprise plastic particles having a diameter of 12 microns and a refractive index of 1.47 to 1.57.

4. A display unit as claimed in any one of claims 1 to 3 **characterised in that** the adhesive has a viscosity in the range of 1000 to 6000 cp.

5. A display unit as claimed in any one of the preceding claims **characterised in that** the adhesive in the space has a thickness of 0.1 to 0.2 mm.

6. A method for manufacturing a display unit according to any one of claims 1 to 5, comprising the steps of:
applying clear adhesive (5) to at least either the back of a transparent touch switch (4) or the display surface (2a) of a liquid crystal display (12) **characterised by**:
registering said transparent touch switch with said liquid crystal display to laminate them thereby providing a contact area of the adhesive (5) between the transparent touch switch (4) and the display surface (2a), moving the transparent touch switch (4) and the display surface (2a) towards one another to expand the contact area, and allowing said clear adhesive to flow to fill a space between said display surface and said transparent touch switch at least on the whole surface of the input area of said touch switch.

7. A method as claimed in claim 6 **characterised in that**:
said transparent touch switch and said liquid crystal display are left so that the clear adhesive flows to fill the space between said display surface and said transparent touch switch at least on the whole surface of the input area of said touch switch.

8. A method as claimed in claim 6 or 7 **characterised in that** the clear adhesive is selected to comprise clear fillers (6).

9. A method as claimed in claim 8 **characterised in that** the clear fillers (6) are arranged to comprise up to about 2% by weight of the adhesive (5).

10. A method as claimed in claim 8 or 9 **characterised by** providing the clear fillers (6) as plastic particles having a diameter of 12 microns and a refractive index of 1.47 to 1.57.

11. A method as claimed in any one of claims 6 to 10 **characterised in that** the adhesive is arranged to have a viscosity in the range of 1000 to 6000 cp.

12. An electronic device, **characterised by** having:
a display unit according to any one of claims 1 to 5 and an input pen (7) having a mechanism (9) for limiting force applied to said touch switch.

## Patentansprüche

1. Anzeigeeinheit mit einem transparenten Berührungsschalter (4) und einer Flüssigkristallanzeige (12), wobei der Berührungsschalter mit der Flüssigkristallanzeige über den mit einem klaren Klebstoff (5) gefüllten Raum zwischen der Anzeigeoberfläche (2a) der Flüssigkristallanzeige und der gegenüberliegenden Oberfläche eines Eingabebereiches des Berührungsschalters verbunden ist, **dadurch gekennzeichnet, daß** der klare Klebstoff in dem Raum zwischen der Anzeigeoberfläche und dem Eingabebereich des Berührungsschalters klare Füllstoffe enthält.

2. Anzeigeeinheit nach Anspruch 1, **dadurch gekennzeichnet, daß** die klaren Füllstoffe (6) bis zu etwa 2 Gew.-% des Klebstoffes (5) enthalten.

3. Anzeigeeinheit nach Anspruch 1 oder 2, **dadurch gekennzeichnet, daß** die klaren Füllstoffe (6) Kunststoffpartikel mit einem Durchmesser von 12 Um und einem Brechungsindex von 1,47 bis 1,57 enthalten.

4. Anzeigeeinheit nach irgendeinem der Ansprüche 1 bis 3, **dadurch gekennzeichnet, daß** der Klebstoff eine Viskosität im Bereich von 1.000 bis 6.000 cp aufweist.

5. Anzeigeeinheit nach irgendeinem der vorangehenden Ansprüche, **dadurch gekennzeichnet, daß** der Klebstoff in dem Raum eine Dicke von 0,1 bis 0,2 mm aufweist.

6. Verfahren zur Herstellung einer Anzeigeeinheit nach irgendeinem der Ansprüche 1 bis 5, das die Schritte umfaßt:
Auftragen eines klaren Klebstoffs (5) auf wenigstens die Rückseite eines transparenten Berührungsschalters (4) und/oder die Anzeigeoberfläche (2a) der Flüssigkristallanzeige (12), **gekennzeichnet durch**:
Einpassen des transparenten Berührungsschalters mit der Flüssigkristallanzeige, um diese zu laminieren, wodurch ein Kontaktbereich des Klebstoffes (5) zwischen dem transparenten Berührungsschalter (4) und der Anzeigeoberfläche (2a) geschaffen wird, Bewegen des transparenten Berührungsschalters (4) und der Anzeigeoberfläche (2a) in Richtung zueinander, um den Kontaktbereich zu erweitern, und Zulassen, daß der klare Klebstoff fließt, um einen Raum zwischen der Anzeigeoberfläche und dem transparenten Berührungsschalter wenigstens auf der gesamten Oberfläche des Eingabebereiches des Berührungsschalters zu füllen.

7. Verfahren nach Anspruch 6, **dadurch gekennzeichnet, daß**:
der transparente Berührungsschalter und die Flüssigkristallanzeige so belassen werden, daß der klare Klebstoff fließt, um den Raum zwischen der Anzeigeoberfläche und dem transparenten Berührungsschalter wenigstens auf der gesamten Oberfläche des Eingabebereichs des Berührungsschalters zu füllen.

8. Verfahren nach Anspruch 6 oder 7, **dadurch gekennzeichnet, daß** der klare Klebstoff so ausgewählt wird, daß er klare Füllstoffe (6) enthält.

9. Verfahren nach Anspruch 8, **dadurch gekennzeichnet, daß** die klaren Füllstoffe (6) so beschaffen sind, daß sie bis zu etwa 2 Gew.-% des Klebstoffes (5) enthalten.

10. Verfahren nach Anspruch 8 oder 9, **gekennzeichnet durch** das Bereitstellen der klaren Füllstoffe (6) in Form von Kunststoffpartikeln mit einem Durchmesser von 12 µm und einem Brechungsindex von 1,47 bis 1,57.

11. Verfahren nach irgendeinem der Ansprüche 6 bis 10, **dadurch gekennzeichnet, daß** der Klebstoff so beschaffen ist, daß er eine Viskosität im Bereich von 1.000 bis 6.000 cp aufweist.

12. Elektronische Vorrichtung, **gekennzeichnet durch**:
eine Anzeigeeinheit nach irgendeinem der Ansprüche 1 bis 5, und einen Eingabestift (7) mit einem Mechanismus (9) zum Begrenzen der auf den Berührungsschalter ausgeübten Kraft.

## Revendications

1. Unité d'affichage avec un commutateur tactile transparent (4) et un affichage à cristaux liquides (12), ledit commutateur tactile adhérant audit affichage à cristaux liquides par le fait que l'espace entre la surface d'affichage (2a) dudit affichage à cristaux liquides et la face opposée d'une zone d'entrée dudit commutateur tactile est rempli d'un adhésif incolore (5) et **caractérisé en ce que** ledit adhésif incolore situé dans l'espace entre la surface d'affichage et la zone d'entrée dudit commutateur tactile contient des charges incolores.

2. Unité d'affichage selon la revendication 1, **caractérisé en ce que** les charges incolores (6) comprennent jusqu'à environ 2 % en poids d'adhésif (5).

3. Unité d'affichage selon la revendication 1 ou 2, caractérisé en que les charges incolores (6) comprennent des particules de plastique ayant un diamètre de 12 microns et un indice de réfraction de 1,47 à 1,57.

4. Unité d'affichage selon l'une quelconque des revendications 1 à 3, **caractérisé en ce que** l'adhésif a une viscosité comprise entre 1 000 et 6 000 cP.

5. Unité d'affichage selon l'une quelconque des revendications précédentes, **caractérisé en ce que** l'adhésif situé dans l'espace a une épaisseur de 0,1 à 0,2 mm.

6. Procédé pour fabriquer une unité d'affichage selon l'une quelconque des revendications 1 à 5, comprenant les étapes consistant à :
appliquer un adhésif incolore (5) au moins sur soit le dos d'un commutateur tactile transparent (4) soit la surface d'affichage (2a) d'un affichage à cristaux liquides (12) **caractérisé par** le fait de :
aligner ledit commutateur tactile transparent avec ledit affichage à cristaux liquides pour les plastifier offrant ainsi une zone de contact de l'adhésif (5) entre le commutateur tactile transparent (4) et la surface d'affichage (2a), déplacer le commutateur tactile transparent (4) et la surface d'affichage (2a) l'un vers l'autre pour élargir la zone de contact, et permettre audit adhésif incolore de se répandre pour remplir un espace entre ladite surface d'affichage et ledit commutateur tactile transparent au moins sur toute la surface de la zone d'entrée dudit commutateur tactile.

7. Procédé selon la revendication 6, **caractérisé en ce que** :
ledit commutateur tactile transparent et ledit affichage à cristaux liquides sont laissés de sorte que l'adhésif incolore se répande pour remplir l'espace entre ladite surface d'affichage et ledit commutateur tactile transparent au moins sur toute la surface de la zone d'entrée dudit commutateur tactile.

8. Procédé selon la revendication 6 ou 7, **caractérisé en ce que** l'adhésif incolore est sélectionné pour comprendre des charges incolores (6).

9. Procédé selon la revendication 8, **caractérisé en ce que** les charges incolores (6) sont adaptées pour comprendre jusqu'à environ 2 % en poids d'adhésif (5).

10. Procédé selon la revendication 8 ou 9, **caractérisé en ce qu'**il procure des charges incolores (6) sous la forme de particules de plastique ayant un diamètre de 12 microns et un indice de réfraction de 1,47 à 1,57.

11. Procédé selon l'une quelconque des revendications 6 à 10, **caractérisé en ce que** l'adhésif est adapté pour présenter une viscosité comprise entre 1 000 et 6 000 cP.

12. Dispositif électronique, **caractérisé en ce qu'**il est muni de :
une unité d'affichage selon l'une quelconque des revendications 1 à 5 et un stylo d'entrée (7) ayant un mécanisme (9) pour limiter la force exercée sur ledit commutateur tactile.
